# EUROPÄISCHE PATENTSCHRIFT

(11) **EP 0 816 013 B1**
(45) Veröffentlichungstag und Bekanntmachung des Hinweises auf die Patenterteilung: **12.12.2001**
(21) Anmeldenummer: 97108452.0
(22) Anmeldetag: 26.05.1997
(51) Int. Cl.: B23Q 1/26, B23Q 23/00

(54) **Spielfrei einstellbare Geradführung**
Adjustable slide without play
Glissière réglable sans jeu

(30) Priorität: 26.06.1996 DE 19625551
(43) Veröffentlichungstag der Anmeldung: 07.01.1998
(73) Patentinhaber: Kühl, Hans, D-73207 Plochingen (DE)
(72) Erfinder: Kühl, Hans, Dipl.-Ing., 73207 Plochingen (DE)
(74) Vertreter: Pöpel, Friedemann

(56) Entgegenhaltungen:
- DE-C- 928 133
- GB-A- 351 852
- GB-A- 548 782

## Beschreibung

Die Erfindung betrifft eine Geradführung für verschiebbare Schlitten in Werkzeugmaschinen, mit mindestens einem, geraden, im wesentlichen zylindrischen Führungsglied, auf dem der Schlitten geführt ist.

GB-A-351852 offenbart eine gattungsgemäße Geradführung.

Werkzeugmaschinen im Sinne der Erfindung sind solche, die einen verschiebbaren Schlitten aufweisen, der entweder mindestens ein Werkzeug zum Bearbeiten mindestens eines Werkstückes oder aber mindestens ein durch mindestens ein Werkzeug zu bearbeitendes Werkstück trägt und eine lineare Relativbewegung zwischen Werkzeug und Werkstück erlaubt. Werkzeugmaschinen dieser Art sind bspw. Bohrwerke, Fräsmaschinen, Schleifmaschinen, Räummaschinen Spritzgießmaschinen und dergleichen.

An die Linearität der Relativbewegung zwischen Werkzeug und Werktück und an ihre Zentrizität zu einer Bezugslinie werden in aller Regel sehr hohe Ansprüche gestellt. Die hinnehmbaren Bearbeitungstoleranzen sind nur einzuhalten, wenn sowohl Fercigungstoleranzen der Werkzeugmaschine als auch Verschleiß der Führungsfiächen des Schlittens bis in den µ-Bereich ausgeglichen werden können.

Der Erfindung war demgemäß die Aufgabe gestellt, auch sehr geringes Spiel zwischen Führungsglied und Schlitten zu vermindern oder ganz aufzuheben, wobei teils die Verschiebbarkeit des Schlittens auf dem Führungsglied erhalten bleiben, teils aber auch aufgehoben und nur durch besondere Maßnahmen ermöglicht Werden sollte.

Zur Lösung dieser Aufgabe macht die Erfindung von der Idee einer älteren Erfindung Gebrauch, die im deutschen Patent 41 09 530 ausführlich beschrieben und dargestellt ist und auf die insoweit Bezug genommen wird. In diesem Patent ist eine Welle/Nabe-Verbindung offenbart, durch die mittels aufeinander abgestimmter Profile in einer Welle und in einer Nabe in Form zylindrischer Keile durch Verdrehen der beiden Teile gegeneinander eine feste Verbindung erreicht wird. Diese Profile bestehen aus je mindestens einem, eine gedachte Zylinderfläche auf einem innen liegenden Teil radial übersteigendem, keilförmigem Nocken und entsprechend mindestens einem, eine gedachte Zylinderfläche etwas größeren Durchmessers in einem äußeren Teil radial nach innen übersteigendem, keilförmigem Nocken, die jeweils wieder steil auf die Zylinderflächen abfallen.

In jener Erfindung wird die feste Verbindung dadurch erzielt, daß die beiden Teile so weit gegeneinander verdreht werden, daß bleibend selbsthemmender Reibschluß zwischen den zu verbindenden Teilen eintritt. Der Reibschluß kann durch Zurückdrehen der Teile zerstörungsfrei aufgehoben und auch erneut hergestellt werden.

Die vorliegende Erfindung sieht dagegen zunächst vor, die beiden mit den zylindrischen Keilprofilen versehenen Teile nur so weit zu verdrehen, daß anfängliches, notwendiges Fügespiel aufgehoben wird, die Teile aber noch aufeinander gleiten können und vor allem späterer Verschleiß ausgeglichen werden kann. Mittels der Erfindung kann demgemäß ein vorgesehenes Spiel zwischen den aufeinander gleitenden Teilen nicht nur anfangs einfach und genau eingestellt, sondern auch später nachgestellt werden.

Zu diesem Zweck schlägt die Erfindung die im Kennzeichen des Hauptanspruches angegebenen Merkmale vor. Dadurch wird erreicht, daß durch Verdrehen der die zylindrischen Keilprofile enthaltenden Teile der gegenseitige Abstand der Keilflächen und dadurch bedingtes, aus Fügespiel oder aus Verschleiß herrührendes Spiel zwischen diesen Teilen zunehmend vermindert und letztlich aufgehoben oder zu geringe Flächenpressung zwischen den Teilen auf dem vorgesehnen Niveau gehalten wird.

Das notwendige gegenseitige Verdrehen der mit den zylindrischen Keilprofilen versehenen Teile kann durch Verdrehen des Führungsgliedes um seine Längsachse erfolgen. Da dieses Führungsglied jedoch in aller Regel auch zur Steifigkeit der Werkzeugmaschine beiträgt, ist bevorzugt vorgesehen, die dem Schlitten zugeordneten zylindrischen Keilprofile in einer Buchse anzuordnen, die im Schlitten drehbar ist.

Aus der DE 41 09 530 ist es bereits bekannt, eines der zusammenwirkenden Profile in einer bei eingetretenem Verschleiß austauschbaren Manschette anzuordnen. Diese Manschette ist jedoch nicht drehbar und kann daher nicht zum Ausgleich von Spiel benutzt werden.

Es ist vorgesehen, die Profile mit einer Mehrzahl von gleichabstandig angeordneten Keilpaaren zu versehen, insbesondere mit drei, um jeweils 120° versetzten Keilpaaren.

Die Steigung der zylindrischen Keile kann zwischen 1:50 und 1:200 betragen. Als in vielen Anwendungsfällen vorteilhaft hat sich eine Steigung von 1:100 erwiesen.

Die Erfindung ist bereits mit nur einem, mit Keilprofil versehenen Führungsglied für einen Schlitten ausführbar. Um ein unkontrolliertes Drehen des Schlittens um das Führungsglied zu verhindern, muß dann ein weiteres Führungsglied vorgesehen sein, das aber nur als Verdrehsicherung zu wirken und keinen Einfluß auf die exakte Führung des Schlittens zu haben braucht. In aller Regel sind jedoch mindestens zwei Führungsglieder bspw. in Form von Säulenführungen vorgesehen, die dann beide mit den erfindungsgemäßen Profilen versehen sind.

Ein trotz engster Einstellung leichter Lauf des Schlittens ist dann erreichbar, wenn die dem Schlitten zugeordneten Zylinderkeilprofile auf dem Umfang drehbar gelagerter Rollen angeordnet sind. Auch hier sind bevorzugt drei, gegeneinander um 120° versetzte Rollen vorgesehen. Auch diese Rollen sind dann in einer Buchse gelagert, die um die Längsachse des Führungsgliedes drehbar und festlegbar ist.

Das Verdrehen der Buchse kann von Hand erfolgen, wobei die Buchse mittels Klemmschrauben, die durch konzentrische Langlöcher greifen, auf dem Schlitten festgeklemmt werden kann.

In einer anderen Ausführungsform kann die Buchse so unter Drehbelastung einer Feder stehen, daß sie bei auftretendem Spiel selbsttätig verdreht und nachgestellt wird. Die Kraft der Feder kann so einstellbar sein, daß selbsttätig eine bestimmte Flächenpressung zwischen den aneinander gleitenden Keilflächen zumindest annähernd aufrecht erhalten wird.

Dieses selbsttätige Nachstellen der Buchse kann dazu dienen, aufgetretenen Verschleiß selbsttätig auszugleichen. Da zumindest die Flächenpressung, gegebenenfalls sogar das Spiel zwischen den Keilflächen auch von der mit der Betriebszeit zunehmenden Temperatur der aufeinander gleitenden Teile abhängt, kann die selbsttätige Verstelleinrichtung auch zum Ausgleich dieser temperaturabhängigen Betriebsbedingungen dienen. Hierbei kann die bei Inbetriebnehmen der Maschine kalte und damit enge Buchse zurückgedreht und dann durch die Kraft der Feder so weit vorwärts gedreht werden, daß bei dem jeweiligen Zustand der Buchse sich die angestrebte Flächenpressung einstellt. Mit zunehmender Betriebstemperatur, bei der sich die Buchse dehnt, vermindert sich die Flächenpressung, was aber durch Nachdrehen der Buchse unter der Kraft der Feder kontinuierlich ausgeglichen wird.

Da der Verdrehwinkel der Buchse zum Ausgleich veränderlicher Flächenpressung, veränderlichen Spiels oder des Verschleißes gering sind, wir eine angestrebte Flächenpressung in engen Grenzen gleich gehalten.

In einer anderen Ausführungsform weisen auch die Lagerflächen zwischen Buchse und Schlitten Profile in Form von zylindrischen Keilen auf, mittels deren sie wie in der eingangs erwähnten Erfindung dargestellt, in Form einer in diesem Falle festen Welle/Nabe-Verbindung im Schlitten sowohl verdrehbar, als auch festklemmbar ist. Die beiden Profilpaarungen können gleiche Steigung aufweisen. Damit bei einem Nachstellen der Buchse zum Ausgleich von Spiel zwischen Buchse und Führungssäule der Reibschluß zwischen Buchse und Schlitzen nicht zu sehr ansteigt, ist bevorzugt vorgesehen, daß die Profilpaarung zwischen Buchse und Schlitten eine geringere Steigung von bspw. 1:200 als die Profilpaarung zwischen Buchse und Führungsglied von bspw. 1:100 aufweist.

Wie erwähnt, sieht die vorliegende Erfindung zunächst vor, die beiden mit den Zylinder-Keilen versehenen Teile nur so weit zu verdrehen, daß die Verschiebbarkeit des Schlittens auf dem Führungsglied erhalten bleibt. In manchen Fällen ist es jedoch erwünscht, den Schlitten arretieren zu können. Dadurch kann ein sog. "Rattern" der Werkzeuge, das deren Standzeit wesentlich verkürzen kann, vermieden werden. Ein derartiges Arrentieren des Schlittens auf dem Führungsglied ist mit der vorliegenden Erfindung ohne weiteres dadurch zu erreichen, daß die Buchse so weit verdreht wird, daß das Spiel zwischen Buchse und Schlitten nicht nur weitestgehend vermindert, sondern ganz aufgehoben und damit Klemmung erreicht wird. Wenn dann dennoch eine Verschieben des Schlittens erfolgen soll, muß diese Klemmung vorübergehend wieder aufgehoben werden.

Eine erste erfindungsgemäße Möglichkeit hierfür besteht darin, daß in die Lagerfläche einer Buchse gegenüber dem Führungsglied Drucköl unter so hohem Druck einleitbar ist, daß die Buchse auf dem Führungsglied "aufschwimmt" und der Schlitten wieder verschiebbar ist. Bei Abbau des Öldruckes wird die Arretierung wieder hergestellt.

Eine andere Möglichkeit zum vorübergehenden Aufheben der Klemmung besteht darin, die Buchse mittels eines Stellorgans bspw. in Form eines Hydraulikzylinders so (zurück) zu verdrehen und damit das Spiel zwischen Buchse und Führungsglied so weit zu erhöhen, daß keine Klemmung mehr gegeben ist.

In den Figuren der Zeichnung sind Ausführungsbeispiele der Erfindung schematisch dargestellt. Es zeigen
- Fig. 1: die Ansicht einer Werkzeugmaschine mit zwei Führungsgliedern in Form von Führungssäulen;
- Fig. 2: das Wirkungsprinzip des Zylinderkeil-Profils im Querschnitt durch die die Profile tragenden Teile;
- Fig. 3: den Längsschnitt durch eine Doppelführung eines Schlittens auf einem Führungsglied;
- Fig. 4: die Draufsicht auf den Gegenstand der Fig. 3;
- Fig. 5: den Querschnitt durch eine Führung mit Rollen mit Zylinderkeilprofil auf deren Umfang;
- Fig. 6: das Befestigen der Buchse mittels Zylinderkeil-Profilen im Querschnitt durch die Buchse;
- Fig. 7: die Ansicht einer selbsttätigen Nachstellvorrichtung der Buchse;
- Fig. 8: die Draufsicht auf den Gegenstand der Fig. 7;
- Fig. 9: eine Möglichkeit zum Aufheben der Klemmung zwischen Buchse und Führungsglied im Längsschnitt durch die Buchse;
- Fig. 10: den Querschnitt durch den Gegenstand der Fig. 7 in der Ebene A-A dieser Figur;
- Fig. 11: eine weitere Möglichkeit zum Aufheben der Klemmung zwischen Buchse und Führungsglied in Draufsicht.

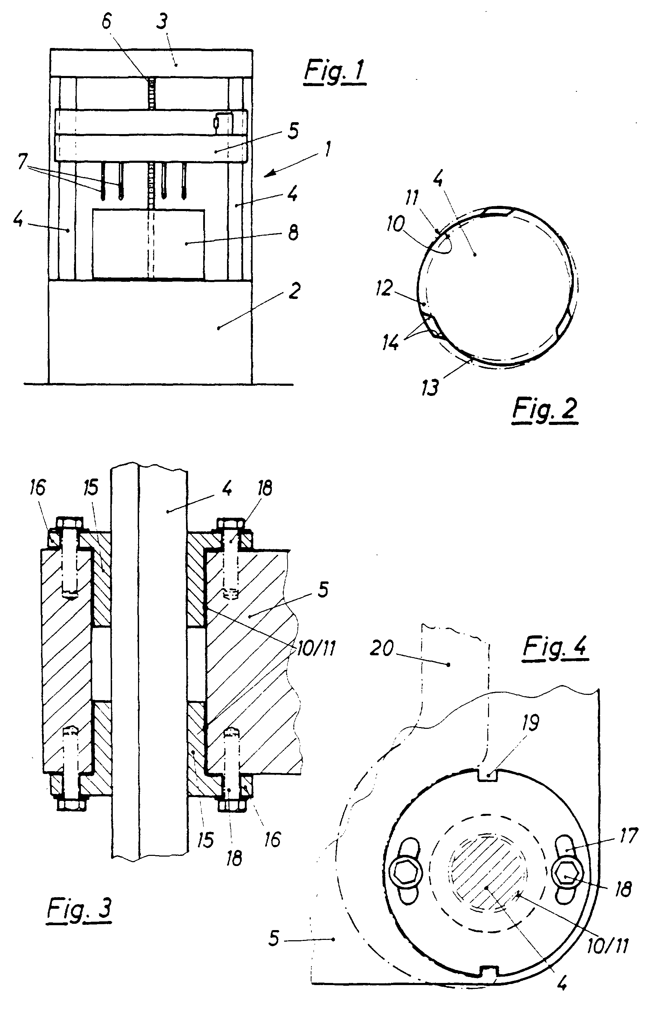

Die Werkzeugmaschine 1 der Fig. 1, als Beispiel ein Bohrwerk, weist ein Maschinengestell mit einem Unterkasten 2, einem Oberkasten 3 und zwei seitlichen Führungssäulen 4 auf, auf denen ein Werkzeugschiitten 5 mittels einer Gewindespindel 6 auf und ab verfahrbar ist. Im Schlitten 5 sind die Werkzeuge - im Beispiel vier Bohrer 7 - gelagert, mit denen das Werkstück 8 bearbeitet wird. Der Vorschub der Bohrer 7 erfolgt durch Absenken des Schlittens 5. Dabei hängt die Genauigkeit des Bchrbildes von der Exaktheit der Führung des Schlittens 5 auf den Führungssäulen 4 ab.

Die Führungssäulen 4 sind mit einem in Fig. 2 zur besseren Erkennbarkeit in starker Überhöhung dargestellten Profil 10 versehen, dem ein entsprechendes Profil 11 in der Führungsbohrung im Schlitten 5 entspricht. Diese Profile 10, 11 bestehen aus mindestens einem Keil, im dargestellten Beispiel aus drei um jeweils 120° gegeneinander versetzten Keilen 12, deren Umfangsflächen 13 allmählich über zur Längsachse zylindrische, strichpunktiert angedeutete Bezugflächen - auf der Führungssäule 4 nach außen, in dem auf dieser geführten Teil nach innen - ansteigen und in einer steilen Böschung 14 wieder auf diese Bezugsflächen abfallen.

Die beiden Teile Führungssäule 4 und Schlitten 5, die die Profile 10, 11 enthalten, sind gegeneinander verdrehbar, so daß beim Verdrehen in Richtung der eingezeichneten Pfeile der Abstand zwischen den Umfangsflächen 13 der Keile 12 zunehmend vermindert und letztlich bis auf null gebracht werden kann. Dabei erfolgt durch die drei gegeneinander versetzten Keile 12 ein genaues Zentrieren der Teile zueinander. Bei weiterem Verdrehen erfolgt ein zunehemdes Erhöhen der Flächenpressung zwischen den Keilflächen.

An sich können die Führungssäulen 4 drehbar sein. Da sie wie im vorliegenden Beispiel jedoch häufig auch Teil des Maschinengestells sind und da der Schlitten 5 in aller Regel nicht drehbar sein kann, ist das dem Schlitten zugeordnete Profil 11 erfindungsgemäß in einer Buchse 15 angeordnet; die ihrerseits drehbar im Schlitten gelagert ist. Dabei sind, um ein Aufbäumen des Schlittens 5 unter der Wirkung des Bearbeitungsdruckes der seitlich gegenüber den Führungssäulen versetzten Werkzeuge 8 zu vermeiden, wie aus Fig. 3 ersichtlich jeder Führungssäule 4 jeweils zwei Buchsen 15 im Schlitten in gegenseitigem Abstand zugeordnet. Die Buchsen 15 sind mit einem Bund 16 versehen, in dem insbesondere aus Fig. 4 ersichtliche Langlöcher 17 angeordnet sind, die von in den Schlitten einschraubbaren Klemmschrauben 18 durchsetzt werden und mittels deren die Buchsen in ihrer jeweiligen Drehstellung arretierbar sind. Der Bund 16 der Buchsen 15 kann Nuten 19 aufweisen, an denen ein gestrichelt angedeuteter Schlüssel 20 zum Verdrehen der Buchsen angesetzt werden kann.

Da die Steigung der Keile 12 so gering ist, daß sie sich im Maßstab der Figuren nicht wahrheitsgetreu wiedergeben läßt, sind die Profile 10, 11 in den Zeichnungen meist nur durch ihre gestrichelte Bezugsfläche angedeutet.

Beim Einsetzen des Schlittens 5 haben die Buchsen 15 eine Stellung, in der sich die steilen Böschungen 14 der Profile 10, 11 auf den Führungssäulen 4 und in den Buchsen 15 benachbart sind. Das dadurch gegebene große Fügespiel erleichtert das Einsetzen des Schlittens. Anschließend werden die Buchsen 15 so weit verdreht, daß das Spiel zwischen den Buchsen und den Führungssäulen 4 aufgehoben wird, ohne das leichte Gleiten des Schlittens 5 zu beeinträchtigen. In dieser Stellung werden die Buchsen 15 mittels der Klemmschrauben 18 arretiert. Wenn dann nach längerer Betriebszeit sich durch Verschleiß wieder ein Spiel zwischen den Buchsen 15 und den Führungssäulen 4 eingestellt hat, kann dieses Spiel nach Lösen der Klemmschrauben 18 durch weiteres Verdrehen der Buchsen wieder ausgeglichen werden.

Die Umfangsflächen 13 der Keile 12 können zylindrisch sein, ihre Krümmung folgt jedoch vorteilhafterweise dem Verlauf einer logarithmischen Spirale, d.h. sie weist über den Umfang gleichbleibende Steigung auf, weil dann in allen Drehstellungen der Profile 10, 11 zueinander die Flächenpressung über die Keilflächen gleich ist. Dies vermindert den Verschleiß der beim Verschieben des Schlittens 5 aufeinander gleitenden Umfangsflächen 13 der Profile 10, 11. Wenn dann nach mehrfachem Nachstellen der Buchsen 15 die Auflageflächen der tragenden Umfangsflächen 13 der Profile 10, 11 zu klein geworden sind, können die Buchsen 15 ausgetauscht werden. Vorteilhafterweise bestehen die Buchsen 15 daher aus einem Lagermaterial mit geringerer Verschleißfestigkeit als die Führungssäulen 4, so daß Verschleiß vor allem auf die leichter austauschbaren Buchsen verlagert wird.

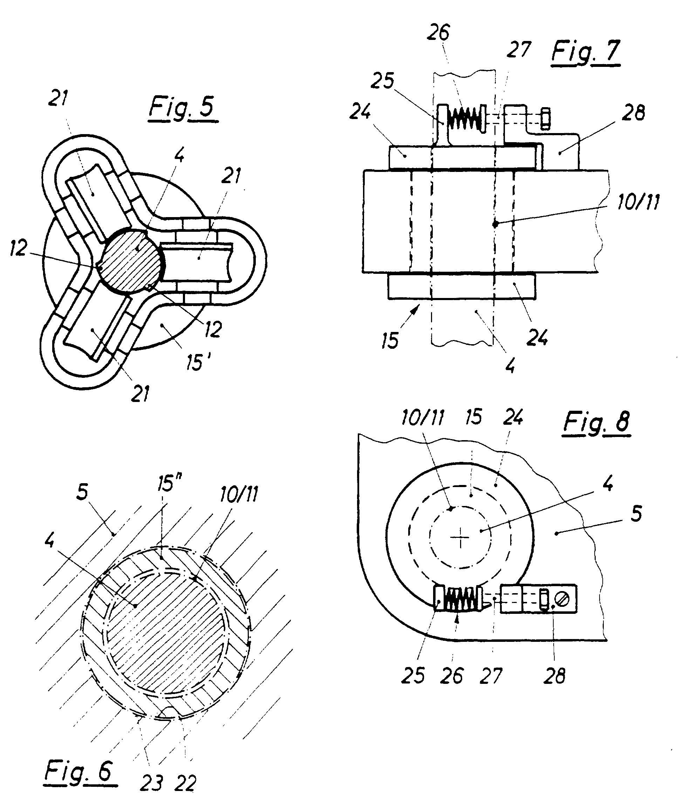

Eine Möglichkeit, um den Verschleiß zu vermindern und leichten Lauf des Schlittens 5 zu erreichen, besteht gemäß Fig. 5 darin, das dem Schlitten zugeordnete Profil 11 in den Umfang von Rollen 21 zu legen, die in einer ebenfalls verdrehbaren Buchse 15' drehbar gelagert sind. Die Umfangsflächen dieser Rollen 21 weisen als Erzeugende den gekrümmten Keil 12 auf dem Umfang der Führungssäule 4 auf. Auch hier kann dann durch Verdrehen der Buchse 15' und mit ihr der Rollen 21 das Spiel zwischen den Rollen und der Führungssäule 4 spielfrei eingestellt werden.

Eine andere Möglichkeit, eine Buchse im Schlitten 5 verdrehbar und arretierbar zu machen, ist in Fig. 6 schematisch dargestellt, in der ebenso wie schon in Fig. 4 die Profile nur mit ihren Bezugsflächen angedeutet sind. Hier ist die Buchse 15" nicht in einem zylindrischen Lager im Schlitten 5 drehbar, sondern weist auch auf ihrer Außenseite ein Profil 22 mit um den Umfang der Buchse gekrümmten Keilen auf, dem ein entsprechendes Profil 23 im Schlitten 5 zugeordnet ist. Durch Verdrehen der Buchse 15" kann ein ursprüngliches Fügespiel in der Profilpaarung zwischen Buchse und Schlitten 5 aufgehoben und die Buchse im Schlitten durch selbsthemmenden Reibschluß festgeklemmt werden.

Damit durch dieses Verdrehen der Buchse 15" einerseits die Buchse mittels der Profilpaarung 22/23 im Schlitten 5 befestigt, andererseits aber auch das Spiel zwischen Buchse und Führungssäule 4 mittels der Profilpaarung 10/11 eingestellt werden kann, weist die gleitende Profilpaarung 10/11 zwischen Buchse und und Führungssäule 4 ein größeres Fügespiel und vorteilhafterweise auch eine größere Steigung auf als die reibschlüssige Profilpaarung 22/23 zwischen Buchse und Schlitten.

Wenn die Profilpaarung zwischen Buchse und Führungssäule eine Steigung von bspw. 1:100 und ein Fügespiel von bspw. 40/1000 mm aufweist, besitzt die Profilpaarung zwischen Buchse und Schlitten eine Steigung von bspw. 1:200 und ein Fügespiel von bspw. 5/1000 mm. Ein Verdrehwinkel von 1° vermindert den Spalt in der Profilpaarung 22/23 mit der Steigung 1:200 um rund 4/1000 mm, in der Profilpaarung 10/11 mit der Steigung 1:100 um rund 8/1000 mm. Nach Fügen der Teile wird bei einem Drehwinkel von etwas mehr als 1° das Fügespiel der Profilpaarung 22/23 zwischen Buchse 15" und Schlitten ausgeglichen. Bei weiterer Drehung wird die Flächenpressung in dieser Profilpaarung erhöht. Wenn dann bei einem Drehwinkel von etwa 5° das Fügespiel in der Profilpaarung 10/11 zwischen Buchse und Führungssäule 4 ausgeglichen wird, hat die Profilpaarung 22/23 bereits Reibschluß erreicht, so daß die Buchse im Schlitten 5 befestigt ist, während sie auf der Führungssäule noch gleiten kann. Weiteres Verdrehen der Buchse 15" zum Erhöhen der Flächenpressung zwischen den Profilpaarung 10/11 oder zum Ausgleich von Verschleiß zwischen der Buchse und der Führungssäule 4 erhöht nur den Reibschluß in der Profilpaarung 22/23.

Dadurch wird erreicht, daß die Buchse 15" allein nach dem Erfordernis des spielfreien Einstellens der Führung des Schlittens 5 auf der Führungssäule 4 erfolgen kann, während die Buchse stets im Schlitten geklemmt bleibt.

Die Buchse kann mittels des Schlüssels 20 nach Gefühl von Hand verdreht werden. In den Schlüssel 20 kann auch ein Momenten-Meßglied integriert sein, um eine objektive Einstellung der Flächenpressung bzw. des Spiels in der Profilpaarung 10/11 zu ermöglichen.

Wie aus Fig. 7 hervorgeht, kann die Buchse 15 auch frei drehbar im Schlitten 5 gelagert sein, wobei sie durch Bünde 24 gegen achsiales Verschieben gesichert ist. An einer Lasche 25 der Buchse 15 greift ein Kraftspeicher, in der dargestellten Ausführungsform eine Druckfeder 26 an, die sich an einer Stellschraube 27 abstützt, die in einem ortsfesten Tragstück 28 schraubbar ist. Die Druckfeder 26 belastet die Buchse 15 mit einem mittels der Stellschraube 27 einstellbaren Moment, das bestrebt ist, die Buchse im Sinne einer Verminderung des Spiels zwischen der Profilpaarung 10/11 zu verdrehen. Über dieses einstellbare Moment kann die Flächenpressung zwischen den Keilflächen der Profile 10 und 11 eingestellt werden.

Die Druckfeder 26 kann selbstverständlich auch als Zugfeder oder als Torsions(Spiral- oder Wendel-)feder ausgebildet sein. Als Kraftspeicher kann auch ein fluidisches (hydraulisches oder pneumatisches) Arbeitselement dienen, dessen ausgeübte Kraft einstellbar ist.

Zwischen dem von dem Kraftspeicher ausgeübten Moment und der Flächenpressung der Keilflächen der Profilpaarung 10/11 stellt sich Gleichgewicht ein. Wenn dieses Gleichgewicht durch Abnahme der Flächenpressung bspw. infolge Verschleißes oder auch nur infolge Durchmesserzunahme der Buchse 15 bei betriebsbedingter Erwärmung gestört wird, wird die Buchse durch die Druckfeder 26 selbsttätig und sofort so weit verdreht, daß dieses Gleichgewicht wieder hergestellt, die Flächenpressung also auf dem angestrebten Wert gehalten wird.

Während in den vorstehend beschriebenen Ausführungsformen der Erfindung stets die Gleitfähigkeit des Schlittens 5 auf der Führungssäule 4 gegeben war, gibt es auch Fälle, bei denen der Schlitten bei einem Bearbeitungsgang festgelegt sein soll, um bei allen Beanspruchungen keinesfalls nachzugeben. Er soll jedoch trotzdem verlagerbar sein.

Um dies mit der vorliegenden Erfindung zu erreichen, ist vorgesehen, mindestens eine Buchse 15 auf jeder Führungssäule 4 so weit zu verdrehen, daß Reibschluß zwischen Buchse und Führungssäule auftritt und damit der Schlitten 5 festgelegt ist.

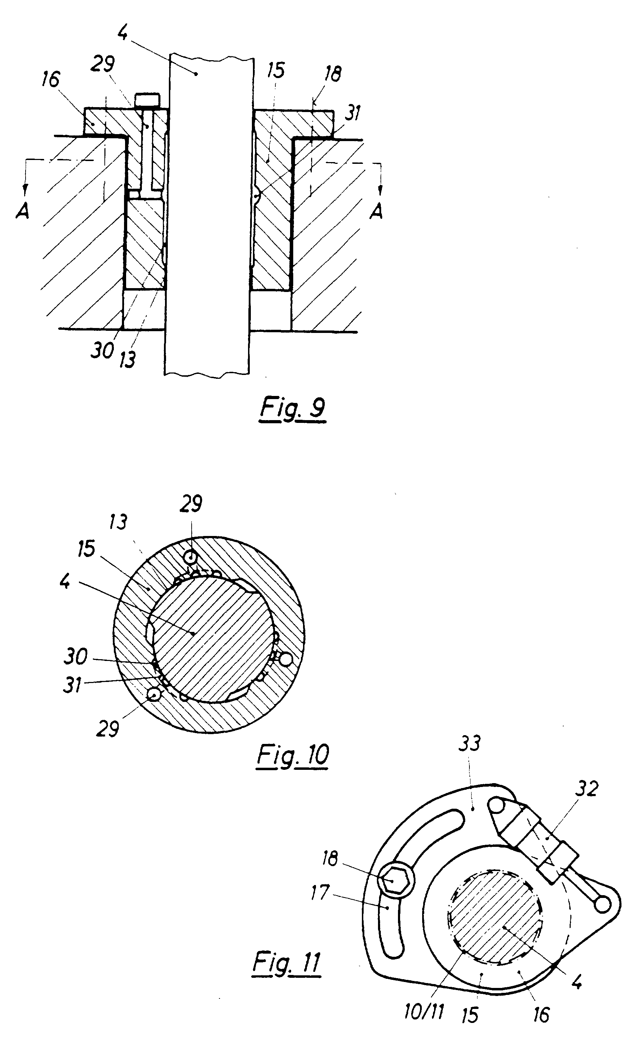

Um den Schlitten 5 trotzdem verlagern zu können, sind gemäß einer ersten Ausführungsvariante nach Fig. 9 in der Buchse 15 achparallele Leitungen 29 und Taschen 30 auf den Umfangsflächen 13 der Keile 12 des Profils 11 in der Buchse vorgesehen. Wie aus dem Querschnitt der Fig. 10 erkennbar, sind auf jeder Keilfläche 13 mehrere, bspw. drei Taschen 30 angeordnet, die jeweils durch eine Verteilnut 31 miteinander verbunden sind und durch eine gesonderte Leitung 29 versorgt werden. Der Anfangsbereich einer Keilfläche 13 bleibt von Taschen 30 frei, da er bei zunehmender Drehstellung der Buchse 15 freigegeben wird und dann das Drucköl austreten lassen würde. Die Taschen 30 sind in der Zeichnung stark überhöht dargestellt, sie sind nur etwa 1/10 mm tief.

Wenn der Schlitten 5 verschoben werden soll, wird über die Leitungen 29 Drucköl mit so hohem Druck in Taschen 30 geleitet, daß die Buchse 15 auf dem sich bildenden Ölfilm "aufschwimmt" und der Schlitten verschiebbar wird. Beim Absenken des Öldruckes wird der Reibschluß wieder hergestellt.

In einer zweiten Ausführungsvariante gemäß Fig. 11 ist vorgesehen, am Bund 16 der Buchse 15 ein fluidisches (pneumatisches oder hydraulisches) Arbeitselement 32 angreifen zu lassen, das andererseits an einer verstellbaren Kulisse 33 angelenkt ist. Die Kulisse 33 ist in ihrer Drehstellung auf dem Schlitten 5 verstellbar und mittels einer Klemmschraube 18 festlegbar. Mittels dieser Kulisse 33 wird bei einer der Endstellungen des Arbeitselementes 32 die Klemmstellung der Buchse 15 festgelegt, in der Reibschluß zwischen Buchse und Führungssäule 4 besteht.

Wenn dieser Reibschluß aufgehoben und der Schlitten 5 verschoben werden soll, wird das Arbeitselement 32 betätigt und dadurch die Buchse 15 so weit verdreht, daß der Reibschluß aufgehoben wird. Durch Umsteuern des Arbeitselementes 32 wird die Buchse 15 wieder in die Ausgangslage zurückgeführt und der Reibschluß wieder hergestellt. Es versteht sich, daß die Wirkrichtung des Arbeitselementes 32 auf die Steigungsrichtung der Keile 12 in den Profilen 10, 11 abgestimmt sein muß.

Das vorstehend beschriebene selbsttätige Verdrehen der Buchse 15 mittels eines Arbeitselementes gemäß Fig. 11 kann in Verbindung mit einer Federbelastung der Buchse gemäß den Fig. 7 und 8 dazu dienen, ein zu enges Spiel zwischen Buchse und Führungssäule, das sich bspw. beim Abkühlen einer betriebwarmen Buchse eingestellt haben kann, durch Zurückdrehen der Buchse mittels des Arbeitselementes zu lüften und dann durch die Druckfeder wieder selbsttätig auf den angestrebten Wert einstellen zu lassen.

Die vorstehend beschriebenen Ausführungsformen der Erfindung an einer Werkzeugmaschine mit an senkrechten Führungssäulen auf und ab bewegbarem Schlitten können natürlich auch an Werkzeugmaschinen mit waagrecht bewegbarem Schlitten verwirklicht werden, bei der die Funktion der Führungssäulen durch Führungsglieder in Form liegender Führungsstangen übernommen wird.

### Bezugszahlenliste

- 1: Werkzeugmaschine
- 2: Unterkasten
- 3: Oberkasten
- 4: Führungssäulen
- 5: Schlitten
- 6: Gewindespindel
- 7: Bohrer
- 8: Werkstück
- 10, 11: Profile
- 12: Keil
- 13: Umfangsfläche
- 14: Böschung
- 15, 15', 15", 15^: Buchse
- 16: Bund
- 17: Langloch
- 18: Klemmschraube
- 19: Nut
- 20: Schlüssel
- 21: Rollen
- 22, 23: Profile
- 24: Bund
- 25: Lasche
- 26: Druckfeder
- 27: Stellschraube
- 28: Tragstück
- 29: Leitung
- 30: Taschen
- 31: Verteilnut
- 32: Arbeitselement
- 33: Kulisse
- 34: Backen
- 35: Taschen
- 36: Tellerfedern

## Patentansprüche

1. Geradführung für verschiebbare Schlitten in Werkzeugmaschinen, mit mindestens einem, geraden, im wesentlichen zylindrischen Führungsglied, auf dem der Schlitten in Längsrichtung geführt ist, **dadurch gekennzeichnet, daß** die Laufflächen zwischen Führungsglied (4) und Schlitten (5) aufeinander abgestimmte Profile (10, 11) haben, die jeweils mindestens drei, eine gedachte Zylinderfläche auf dem Führungsglied radial übersteigende, gleichmäßig in Umfangsrichtung versetzte, in Längsrichtung des Führungsgliedes verlaufende Keile (12) und entsprechend angeordnete, eine gedachte Zylinderfläche etwas größeren Durchmessers im Schlitten radial nach innen übersteigende Keile (12) aufweisen, und daß die Winkelstellung der die Profile aufweisenden Teile zueinander veränderbar ist.

2. Geradführung nach Anspruch 1, **dadurch gekennzeichnet, daß** das Führungsglied (4) um seine Längsachse verdrehbar ist.

3. Geradführung nach Anspruch 1, **dadurch gekennzeichnet, daß** das dem Schlitten (5) zugeordnete Profil (11) in einer im Schlitten um die Längsachse des Führungsgliedes (4) drehbar gelagerten Buchse (15, 15', 15") angeordnet ist.

4. Geradführung nach Anspruch 1, **dadurch gekennzeichnet, daß** die Profile (10, 11) jeweils drei, um 120° versetzte Keile (12) aufweisen.

5. Geradführung nach Anspruch 1, **dadurch gekennzeichnet, daß** die Keile (12) eine Steigung von 1:50 bis 1:200 aufweisen.

6. Geradführung nach Anspruch 1, **dadurch gekennzeichnet, daß** die Steigung der Keilflächen (13) dem Varlauf einer logarithmischen Spirale folgt.

7. Geradführung nach Anspruch 1, **dadurch gekennzeichnet, daß** die Keile (12) des dem Schlitten (5) zugeordneten Profils (11) auf dem Umfang von Rollen (21) angeordnet sind, die auf dem Führungsglied (4) laufen.

8. Geradführung nach Anspruch 1, **dadurch gekennzeichnet, daß** die Buchse (15, 15', 15") im Schlitten (5) in ihrer Drehstellung arretierbar ist.

9. Geradführung nach Anspruch 8, **dadurch gekennzeichnet, daß** die Buchse (15'') in einem im wesentlichen zylindrischen Lager im Schlitten (5) gehaltert ist, wobei die Flächen dieses Lagers mit aufeinander abgestimmten Profilen (22, 23) versehen sind, deren jedes mindestens einen in Umfangsrichtung ansteigenden Keil (12) aufweist.

10. Geradführung nach Anspruch 9, **dadurch gekennzeichnet, daß** das Fügespiel in der gleitenden Profilpaarung (10/11) zwischen Buchse (15") und Führungssäule (4) größer ist als in der reibschlüssigen Profilpaarung (22/23) zwischen Buchse (15") und Schlitten (5).

11. Geradführung nach Anspruch 10, **dadurch gekennzeichnet, daß** die Steigung der Keile (12) in der Profilpaarung (10/11) zwischen Buchse (15") und Schlitten (5) geringer ist als diejenige der Keile (12) in der Profilpaarung (22/23) zwischen Buchse (15) und Führungsglied (4).

12. Geradführung nach einem der vorhergehenden Ansprüche, **dadurch gekennzeichnet, daß** die die Profile (10, 11) aufweisenden Teile (4, 5) bis zum spielfreien Lauf der Teile aufeinander gegeneinander verdrehbar und festlegbar sind.

13. Geradführung nach einem der vorhergehenden Ansprüche, **dadurch gekennzeichnet, daß** die die Profile (10, 11) aufweisenden Teile (4, 5) unter Wirkung eines verstellbaren Kraftspeichers bis zum spielfreien Lauf der Teile aufeinander gegeneinander verdrehbar sind.

14. Geradführung nach einem oder mehreren der vorhergehenden Ansprüche, **dadurch gekennzeichnet, daß** die die Profile (10, 11) aufweisenden Teile (4, 5) bis zum Reibschluß zwischen den Teilen gegeneinander verdrehbar sind und der Reibschluß aufhebbar ist.

15. Geradführung nach Anspruch 14, **dadurch gekennzeichnet, daß** die Lagerfläche zwischen Buchse (15) und Führungsglied (4) mit Taschen (30) versehen ist, in die zum Aufheben des Reibschlusses Drucköl einleitbar ist.

16. Geradführung nach Anspruch 14, **dadurch gekennzeichnet, daß** die Buchse (15) mittels eines ansteuerbaren Stellgliedes (32) zwischen einer Stellung, in der Reibschluß gegeben ist und einer Stellung, in der der Reibschluß aufgehoben ist, verdrehbar ist.

17. Geradführung nach einem der vorhergehenden Ansprüche, **dadurch gekennzeichnet, daß** die Umfangsflächen (13) der Keile (12) in der Buchse (15⁻) auf radial geführten Backen (34) angeordnet sind, die mittels Federelementen (36) gegen die Buchse abgestützt sind.

## Claims

1. A slide guide for movable slides in machine tools with at least one straight, essentially cylindrical guide member along which the slide is moved in longitudinal direction,
**characterised in that**
the bearing surfaces between the guide member (4) and the slide (5) have matching profiles (10, 11), each of which has at least three wedges (12) running along the guide member which are circumferentially offset and radially surmount an imaginary cylinder surface on the guide member and appropriately positioned wedges (12) which inwardly radially surmount an imaginary cylinder surface of somewhat larger diameter in the slide, and that the angle between the parts with the profiles can be modified.

2. A slide guide in accordance with claim 1,
**characterised in that**
the guide member (4) can be rotated about its longitudinal axis.

3. A slide guide in accordance with claim 1,
**characterised in that**
the profile (11) connected to the slide (5) is positioned in a bush (15, 15', 15") mounted in the slide in such a manner that it can rotate about the longitudinal axis of the guide member (4).

4. A slide guide in accordance with claim 1,
**characterised in that**
the profiles (10, 11) each have three wedges (12) which are offset by 120°.

5. A slide guide in accordance with claim 1,
**characterised in that**
the wedges (12) have an ascending gradient of 1:50 to 1:200.

6. A slide guide in accordance with claim 1,
**characterised in that**
the ascending gradient of the wedge surfaces (13) follows the course of a logarithmic spiral.

7. A slide guide in accordance with claim 1,
**characterised in that**
the wedges (12) of the profile (11) connected to the slide (5) are positioned on the circumference of rollers (21) which run on the guide member (4).

8. A slide guide in accordance with claim 1,
**characterised in that**
the bush (15, 15', 15") can be blocked in a rotated position in the slide (5).

9. A slide guide in accordance with claim 8,
**characterised in that**
the bush (15") is held in an essentially cylindrical bearing in the slide (5), with the surfaces of this bearing being provided with matching profiles (22, 23) each of which having at least one wedge (12) which ascends circumferentially.

10. A slide guide in accordance with claim 9,
**characterised in that**
the joint play in the sliding profile pair (10/11) between the bush (15") and the guide column (4) is greater than in the frictionally engaged profile pair (22/23) between the bush (15") and the slide (5).

11. A slide guide in accordance with claim 10,
**characterised in that**
the ascending gradient of the wedges (12) in the profile pair (10/11) between the bush (15") and the slide (5) is less than that of the wedges (12) in the profile pair (22/23) between the bush (15) and the guide member (4).

12. A slide guide in accordance with one of the preceding claims,
**characterised in that**
the parts (4, 5) with the profiles (10, 11) can be rotated in relation to one another and secured until the parts run without play.

13. A slide guide in accordance with one of the preceding claims,
**characterised in that**
the parts (4, 5) with the profiles (10, 11) can be rotated towards and against each other under the effect of an adjustable energy accumulator until the parts run without play.

14. A slide guide in accordance with one or more of the preceding claims,
**characterised in that**
the parts (4, 5) with the profiles (10, 11) can be rotated against each other until the parts are frictionally engaged and that the frictional engagement can be released.

15. A slide guide in accordance with claim 14,
**characterised in that**
the bearing surface between the bush (15) and the guide member (4) is provided with pockets (30) into which compressed oil can be fed to release the frictional engagement.

16. A slide guide in accordance with claim 14,
**characterised in that**
the bush (15) can be rotated by means of a drivable actuator (32) between a position in which there is frictional engagement and a position in which the frictional engagement is released.

17. A slide guide in accordance with one of the preceding claims,
**characterised in that**
the circumferential surfaces (13) of the wedges (12) are positioned in the bush (15') on radially guided cheeks (34) which are supported against the bush by means of spring element (36).

## Revendications

1. Guide rectiligne pour des chariots mobiles dans des machines-outils, comportant au moins un organe de guidage rectiligne essentiellement cylindrique, sur lequel le chariot est guidé dans la direction longitudinale, **caractérisé en ce que** les surfaces de circulation entre l'organe de guidage (4) et le chariot (5) possèdent des profile (10,11) accordés entre eux et qui possèdent respectivement au moins trois coins (12), qui font saillie radialement au-delà d'une surface cylindrique imaginaire sur l'organe de guidage, sont décalés uniformément dans la direction circonférentielle et s'étendent, dans la direction longitudinale de l'organe de guidage, et des coins (12), qui sont disposés de façon correspondante et font saillie radialement vers l'intérieur par rapport à une surface cylindrique imaginaire d'un diamètre légèrement supérieur présente dans le chariot, et que la position angulaire réciproque des pièces comportant les profils peut être modifiée.

2. Guide rectiligne selon la revendication 1, **caractérisé en ce que** l'organe de guidage (4) peut tourner autour de son axe longitudinal.

3. Guide rectiligne selon la revendication 1, **caractérisé en ce que** le profil (11) associé au chariot (5) est disposé dans une douille (15,15',15") montée de manière à pouvoir tourner dans le chariot autour de l'axe longitudinal de l'organe de guidage (4).

4. Guide rectiligne selon la revendication 1, **caractérisé en ce que** les profile (10,11) possèdent chacun trois coins (12) décalés de 120°.

5. Guide rectiligne selon la revendication 1, **caractérisé en ce que** le coin (12) possède une pente comprise entre 1:50 à 1:200.

6. Guide rectiligne selon la revendication 1, **caractérisé en ce que** la pente des surfaces en coin (13) suit la forme d'une spirale logarithmique.

7. Guide rectiligne selon la revendication 1, **caractérisé en ce que** les coins (12) du profil (11) associé au chariot (5) sont disposés sur la périphérie de rouleaux (21), qui roulent sur l'organe de guidage (4).

8. Guide rectiligne selon la revendication 1, **caractérisé en ce que** la douille (15,15',15") dans le chariot (5) peut être bloquée dans sa position de rotation.

9. Guide rectiligne selon la revendication 8, **caractérisé en ce que** la douille (15") est retenue dans un palier essentiellement cylindrique formé dans le chariot (5), les surfaces de ce palier étant pourvues de profils (22,23) accordés les uns sur les autres et dont chacun possède au moins un coin (12) qui remonte dans la direction circonférentielle.

10. Guide rectiligne selon la revendication 9, **caractérisé en ce que** le jeu de jonction dans l'accouplement glissant de profils (10/11) entre la douille (15") et la colonne de guidage (4) est plus grand que dans l'accouplement de profils selon une liaison de frottement (22/23), entre la douille (15") et le chariot (5).

11. Guide rectiligne selon la revendication 10, **caractérisé en ce que** la pente des coins (12) dans l'accouplement de profils (10/11) entre la douille (15") et le chariot (5) est inférieure à celle des coins (12) dans l'accouplement de profils (22/23) entre la douille (15) et l'organe de guidage (4).

12. Guide rectiligne selon l'une des revendications précédentes, **caractérisé en ce que** les pièces (4,5), qui comportent les profils (10,11), peuvent être fixées les unes par rapport aux autres jusqu'à l'obtention du fonctionnement sans jeu des éléments.

13. Guide rectiligne selon l'une des revendications précédentes, **caractérisé en ce que** les pièces (4, 5) qui comportent les profils (10, 11), peuvent tourner l'une par rapport à l'autre sous l'action d'un accumulateur de force réglable, jusqu'à un déplacement sans jeu des pièces, l'une par rapport à l'autre.

14. Guide rectiligne selon l'une des revendications précédentes, **caractérisé en ce que** les pièces (4, 5) possédant les profils (10, 11) peuvent tourner l'une par rapport à l'autre jusqu'à l'apparition d'une liaison à frottement entre les pièces, et la liaison à frottement peut être supprimé.

15. Guide rectiligne selon la revendication 14, **caractérisé en ce que** la surface de support entre la douille (15) et l'organe de guidage (4) comporte des poches (30), dans lesquelles de l'huile sous pression peut être introduite pour supprimer la liaison à frottement.

16. Guide rectiligne selon la revendication 14, **caractérisé en ce que** la douille (15) peut tourner sous l'action d'un organe de réglage commandable (32), entre une position, dans laquelle la liaison à frottement est établie et une position, dans laquelle la liaison à frottement est supprimée.

17. Guide rectiligne selon l'une des revendications précédentes, **caractérisé en ce que** les surfaces périphériques (13) des coins (12) dans la douille (15") sont disposées sur des parties mâchoires (34) guidées radialement, qui prennent appui contre la douille au moyen d'éléments de ressort (36).
